# EUROPEAN PATENT APPLICATION

(11) **EP 2 036 806 A2**
(43) Date of publication of application: **18.03.2009**
(21) Application number: 08164191.2
(22) Date of filing: 11.09.2008
(51) Int. Cl.: B62K 11/00, B62K 15/00

(54) **Foldable frame for a vehicle with two or more wheels**

(30) Priority: 12.09.2007 IT CT20070019
(71) Applicant: DI Blasi Industriale S.r.l., Vizzini (IT)
(72) Inventor: Di Blasi, Carmelo, 96015 Francofonte (IT); Di Blasi, Carlo Maria, 96015 Francofonte (IT)
(74) Representative: Jorio, Paolo

(57) **Abstract**

Foldable frame for vehicles (1) with two or more wheels **characterized in that** it comprises a front fork (2) connected in a usual way to a steering column tube (6). Said steering column tube (6) is, in turn, connected to a main frame (22) of the vehicle (1) by means of a hinge (7) and by means of a connecting rod (11) which can be operated to make the fork (2) rotate about the hinge (7) to position it adjacent to the frame and thus reduce the overall longitudinal size of the folded vehicle

## Description

### 1. Field of the invention

The present invention relates to a foldable frame for a vehicle with two or more wheels powered by a motor or by physical force.

By means of the frame which is the object of the present invention it is possible to produce a foldable vehicle so that the overall size of said vehicle can be reduced, for example to enable it to be transported in the luggage compartment of a car.

### 2. Prior art

Foldable frames for bicycles, tricycles or motorcycles are known in the prior art.

For example patent US-3 887 218 (Di Blasi) relates to a foldable vehicle which comprises a frame defined by at least a first articulated quadrilateral connected by at least one lever to a saddle fitted to a second articulated quadrilateral. The two articulated quadrilaterals can be collapsed to reduce the overall size of said quadrilaterals and thus of the vehicle; this is done simply by acting on the saddle. The overall size of the vehicle can be further reduced by folding the handlebar. However, in the vehicles produced according to the invention described in the above document, the reduction in the overall size of the folded vehicle is limited by the fact that the front fork is inclined at a fixed angle.

Therefore, the object of the present invention is to achieve a further reduction in the overall size of the folded vehicle with a system for altering the inclination of the front fork it order to position it closer to the rest of the folded frame.

### 3. List of drawings

The present invention will now be described with reference to the attached drawings, illustrating a non-limiting embodiment thereof, in which:
- figure 1 is a view of a vehicle with two wheels powered by a motor, according to the present invention, shown in the open position, i.e. in the travelling configuration;
- figure 2 shows the same vehicle partially folded; and
- figure 3 shows the same vehicle fully folded, i.e. in the minimum overall size configuration.

### 4. Detailed description of the invention

With reference to the attached drawings, number 1 indicates a vehicle with two wheels powered by a motor according to the present invention. Incidentally, the description of the members of the frame described below which do not lie in the vehicle's plane of symmetry are to be taken to refer to a pair of said members arranged symmetrically with respect to said plane.

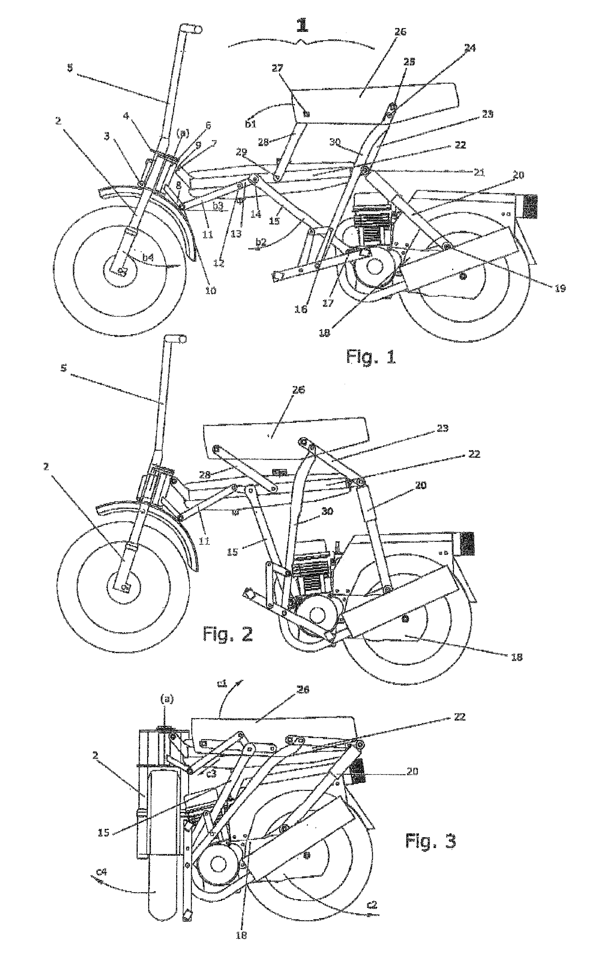

The vehicle 1 comprises a front fork 2 and a handlebar 5 hinged at a lower portion 3 to said fork 2. The handlebar 5 is blocked in the travelling configuration by means of a hook 4 integral with a tube member of the fork 2. Said tube member is integral with the fork 2 and rotates inside a steering column tube 6 about an axis (a). When the vehicle 1 is in the travelling configuration illustrated in figure 1, the steering column tube 6, and thus the fork 2, are inclined in the usual manner, that is at an angle of approximately 25° with respect to the vertical.

The upper part of the steering column tube 6 comprises a lug 9 that is connected by means of a hinge 7 to the front part of a central frame 22. The lower part of the steering column tube 6 comprises a lug 8 that is connected by means of a hinge 10 to a first end of a connecting rod 11. The hinges 7 and 10 have parallel axes and are substantially normal to the longitudinal plane of symmetry of the vehicle 1.

One end of a member 15 is hinged, by means of a hinge 14, in the middle portion of the central frame 22. Said end of the member 15 is provided with an integral lug 13 that is hinged to the second end of the connecting rod 11 by means of a hinge 12.

The rear part of the vehicle 1 is produced according to that described in the aforesaid patent US-3 887 218 (Di Blasi).

It thus comprises a first articulated quadrilateral which, in turn, comprises the members 15, 18, 20, 22, articulated at hinges 14, 17, 19, 21, and a second articulated quadrilateral which, in turn, comprises the members 22, 23, 26, 28, articulated at hinges 29, 21, 25, 27.

The two quadrilaterals are connected to one another by a rod 30 of which a first end 24 is hinged to the member 23 of the second quadrilateral, while its second end 16 is hinged to a lug of the member 15 of the first quadrilateral. This connection is such that when the second quadrilateral is collapsed it causes the first to collapse.

In particular, starting from the travelling configuration illustrated in figure 1, when the second quadrilateral is collapsed by moving the member 26 (consisting, in practice, of the saddle of the vehicle) in a direction (b1) so that said saddle is positioned adjacent to the frame 22 (minimum overall size configuration), the first quadrilateral also collapses and moves forward in a direction (b2) so that it also assumes the minimum overall size configuration (figures 2 and 3).

When the second quadrilateral is collapsed it causes the member 15 to rotate about the hinge 14 in a direction such that the integral lug 13 pulls the connecting rod 11 in a direction (b3). This movement of the connecting rod 11 causes a rotation (b4) of the steering column tube 6 and of the fork 2 carried thereby about the hinge 7; the steering column tube 6 and the fork 2 thus move from the travelling configuration, inclined at an angle of approximately 25° with respect to the vertical (figure 1), to an inclination of approximately 0° in the folded position (figure 3). This change in the angle of inclination of the fork 2 thus results in a further reduction in the overall size of the vehicle 1 in the folded position (figure 3) in addition to the reduction achieved by collapsing the two articulated quadrilaterals.

The overall longitudinal size of the folded vehicle 1 can be further reduced by rotating the fork by approximately 90° about the axis (a) (figure 3). The vehicle 1 is fully folded by folding the handlebar 5. This is done by rotating it about the hinge 3 after freeing it from the hook 4.

Vice versa, when said two articulated quadrilaterals are collapsed in the directions (c1) and (c2) starting from the folded configuration illustrated in figure 3, to make the vehicle 1 assume the travelling configuration illustrated in figure 1, the member 15 rotates in a direction such that the lug 13 pushes the connecting rod 11 in the direction (c3).

This movement causes the steering column tube 6 and the fork 2 to rotate about the hinge 7 in the direction (c4) so that said fork 2 is re-positioned in the travelling configuration at the usual angle of inclination of approximately 25° with respect to the vertical (figure 1). Moreover, the fork 2 is blocked in this configuration because, since the quadrilaterals are blocked in the travelling configuration, so too is the connecting rod 11 and thus also the fork 2. Once the handlebar 5 has been raised it is blocked in the travelling position by the hook 4 that keeps it joined to the fork 2.

## Claims

1. Foldable frame for vehicles (1) with two or more wheels
**characterized in that** it comprises a front fork (2) rotatable about the axis of a steering column tube (6) that is hinged, by means of a hinge (7), to a member (22) of the frame of the vehicle (1), and, by means of a hinge (10), to a first end of a connecting rod (11) the second end of which is hinged, by means of a hinge (12), to another member (15) of the frame of the vehicle (1);
**and in that** the axes of rotation of the hinges (7) and (10) are essentially perpendicular to the longitudinal plane of symmetry of the vehicle.

2. Foldable frame, according to claim 1, **characterized in that** a rotation of a member (15) causes the movement of said connecting rod (11) and thus the rotation of said front fork (2) about said hinge (7), in order to reduce the overall longitudinal size of said front fork (2) when the vehicle (1) is folded in the minimum overall size position, and to return said front fork (2) to the travelling position when the vehicle (1) is unfolded in the travelling configuration.

3. Foldable frame, according to any one of the previous claims, **characterized in that** it comprises a first articulated quadrilateral consisting of members (15, 18, 20, 22), articulated at hinges (14, 17, 19, 21), and a second articulated quadrilateral consisting of members (22, 23, 26, 28) articulated at hinges (29, 21, 25, 27); the two quadrilaterals being connected to one another by means of a rod (30), a first end of which (24) is hinged to the member (23) of the second quadrilateral, while its second end (16) is hinged to a lug of the member (15) of the first quadrilateral, so that when the second quadrilateral is collapsed it causes the first quadrilateral to collapse.

4. Foldable frame, according to claim 3, **characterized in that**, starting from the travelling configuration, if the second quadrilateral is collapsed by moving a member (26) in a direction (b1) to position said member (26) adjacent to the frame (22) the first quadrilateral also collapses and moves forward in a direction (b2); **in that** case the two quadrilaterals assume a minimum overall size configuration.

5. Foldable frame, according to claim 4, **characterized in that** the collapsing of the second quadrilateral causes the member (15) to rotate about the hinge (14) in a direction such that the integral lug (13) pulls the connecting rod (11) in a direction (b3); the movement of the connecting rod (11) causing a rotation (b4) of the steering column tube (6) and the fork (2) carried thereby about the hinge (7), so that the steering column tube (6) and the fork (2) move from the travelling configuration to an angle of inclination associated with the folded position.

6. Foldable frame, according to claim 4 or claim 5, **characterized in that** said member (26) is the saddle of the vehicle (1).

7. Foldable frame, according to any one of the previous claims, **characterized in that** the overall longitudinal size of the folded vehicle (1) is further reduced by rotating the front fork (2) by approximately 90° with respect to the direction of travel.

8. Foldable frame, according to any one of the claims from 2 to 7, **characterized in that** the connecting rod (11) is moved manually and independently of the rotation of any member of the vehicle (1).
